(19) Europäisches Patentamt
European Patent Office
Office européen des brevets

(11) Veröffentlichungsnummer : **0 462 928 A2**

# (12) EUROPÄISCHE PATENTANMELDUNG

(21) Anmeldenummer : **91810438.1**

(22) Anmeldetag : **11.06.91**

(51) Int. Cl.[5] : **C09B 57/00**, G11B 7/24

(30) Priorität : **19.06.90 CH 2036/90**

(43) Veröffentlichungstag der Anmeldung :
**27.12.91 Patentblatt 91/52**

(84) Benannte Vertragsstaaten :
**CH DE FR GB LI**

(71) Anmelder : **CIBA-GEIGY AG**
**Klybeckstrasse 141**
**CH-4002 Basel (CH)**

(72) Erfinder : **Adam, Jean-Marie, Dr.**
**Rue de Village Neuf 60**
**F-68300 Rosenau (FR)**

## (54) Indoliniminfarbstoffe.

(57) Die neuen Farbstoffe der Formel (1) gemäss Anspruch 1 eignen sich als lichtabsorbierende Substanzen in optischen Aufzeichnungsmedien.

EP 0 462 928 A2

Die vorliegende Erfindung betrifft neue Indoliniminfarbstoffe, Verfahren zu ihrer Herstellung sowie ihre Verwendung als NIR-absorbierende Substanzen in optischen Aufzeichnungsmedien.
Die erfindungsgemässen Farbstoffe entsprechen der Formel

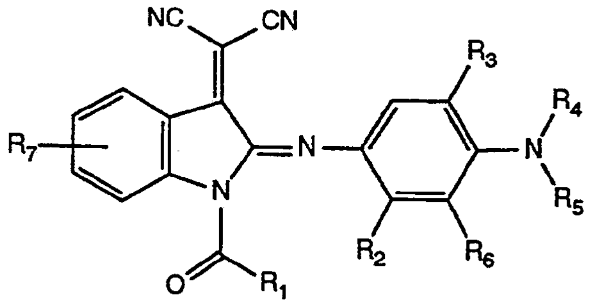 (1)

worin $R_1$ Alkyl oder Aryl, $R_2$ Wasserstoff, Alkyl, Alkoxy, -NH-CO-Alkyl oder -NH-CO-Aryl, $R_3$ Wasserstoff, Alkoxy, Aryloxy, Alkylthio, Arylthio oder $R_3$ und $R_4$, zusammen mit dem Stickstoffatom und den beiden sie verbindenden C-Atomen, einen 5-oder 6-gliedrigen Ring, welcher einen ankondensierten Benzolring aufweisen kann, $R_4$ Wasserstoff, Alkyl, Aralkyl oder $R_4$ und $R_5$ zusammen mit dem Stickstoffatom, an das sie gebunden sind, einen 5- oder 6-gliedrigen Ring, $R_5$ Wasserstoff, Alkyl oder Aralkyl, $R_6$ Wasserstoff oder $R_5$ und $R_6$, zusammen mit dem Stickstoffatom und den beiden sie verbindenden C-Atomen, einen 5- oder 6-gliedrigen Ring und $R_7$ Wasserstoff, Alkyl, Hydroxy, Alkoxy, Halogen oder Nitro bedeuten.

Unter Alkylresten sind erfindungsgemäss generell geradkettige, verzweigte oder cyclische Alkylgruppen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, Cyclopentyl, Cyclohexyl, Methylcyclohexyl sowie die dazugehörenden Isomeren. Die Alkylreste enthalten vorzubsweise 1 bis 6 C-Atome, vor allem 1 bis 4 C-Atome.

Diese Alkylreste können substituiert sein, z.B. durch Halogen, Hydroxy, Alkoxy, Cyan oder Phenyl. Beispiele für solche substituierten Alkylreste sind Hydroxyethyl, Methoxymethyl, Ethoxyethyl, Cyanethyl, Propoxypropyl, Benzyl, Chlorethyl oder Cyanethoxyethyl.

Geeignete Alkoxyreste sind vorzugsweise solche mit 1-4 C-Atomen z.B. Methoxy, Ethoxy, Propoxy, iso-Propoxy, n-Butoxy, iso-Butoxy oder tert.-Butoxy.

Unter Halogen ist in dieser Anmeldung generell Fluor, Brom, Jod oder vor allem Chlor zu verstehen.

Die Arylreste stellen aromatische carbocyclische oder heterocyclische Reste dar. Es handelt sich z.B. um Phenyl, Naphthyl-1, Naphthyl-2, Pyridyl-2, Pyridyl-3, Pyridyl-4, Pyrimidyl-2 oder Thienyl-2. Diese Reste können substituiert sein, z.B. durch Halogen, $C_1$-$C_6$-Alkyl, $C_1$-$C_4$-Alkoxy, Nitro oder CN.

$R_3$ und $R_4$ können ebenso wie $R_5$ und $R_6$ zusammen mit dem Stickstoffatom und den beiden sie verbindenden Kohlenstoffatomen einen 5- oder 6-gliedrigen Ring bilden, welcher ein weiteres Heteroatom, z.B. Sauerstoff oder Schwefel, enthalten kann. Ausserdem kann der Ring substituiert sein, z.B. durch Hydroxy, Alkoxy, Alkyl, Halogen CN oder Phenyl, oder einen weiteren ankondensierten Benzolring tragen. Bevorzugte Ringe, welche durch $R_3$, $R_4$, bzw. $R_5$, $R_6$, und die verbindenden Kohlenstoffatome und das Stickstoffatom gebildet werden, sind Dihydrooxazin- und Di- oder Tetrahydropyridinringe, welche 0 bis 4 Methylgruppen tragen.

$R_4$ und $R_5$ können auch zusammen mit dem sie verbindenden N-Atom einen Piperidin-, Morpholin- oder Piperazinrest bilden. Der Piperazinrest kann am nicht mit dem Triazinrinb verbundenen N-Atom durch $C_1$-$C_4$-Alkyl oder Hydroxy-$C_1C_4$-Alkyl oder Amino-$C_1$-$C_4$-Alkyl substituiert sein. Der bevorzubte Substituent ist Hydroxyethyl.

In besonders wertvollen Farbstoffen der Formel (1) stellt $R_1$ einen unsubstituierten $C_1$-$C_4$-Alkylrest, insbesondere Methyl, dar.

$R_2$ bedeutet vorzugsweise Wasserstoff, $C_1$-$C_4$-Alkyl, $C_1$-$C_4$-Alkoxy, $C_1$-$C_4$-Alkylcarbonylamino oder Phenylcarbonylamino, wobei Wasserstoff, Methyl, Methoxy, Acetylamino und Propionylamino besonders bevorzugt sind.

Die bevorzubten Bedeutungen von $R_3$ sind Wasserstoff, $C_1$-$C_4$-Alkyl, $C_1$-$C_4$-Alkoxy oder $R_3$ und $R_4$ bilden zusammen mit dem Stickstoffatom und den sie verbindenden Kohlenstoffatomen einen Dihydrooxazin- oder Tetrahydropyridinring, welcher 1 bis 3 Methylgruppen trägt.

Weitere bevorzugte Bedeutungen von $R_4$ sind Wasserstoff, unsubstituiertes $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist.

$R_5$ bedeutet vorzugsweise Wasserstoff, unsubstituiertes $C_1$-$C_4$-Alkyl oder $C_1$-$C_4$-Alkyl, welches durch

Hydroxy, $C_1$-$C_4$-Alkoxy, Chlor, Cyan, Phenyl oder Cyanethoxy substituiert ist.

$R_6$ ist vorzubsweise Wasserstoff oder $R_6$ bildet zusammen mit $R_5$ und dem Stickstoffatom und den sie verbindenden Kohlenstoffatomen einen Tetrahydropyridinring, welcher unsubstituiert oder durch Hydroxy oder Chlor substituiert ist.

Die bevorzubte Bedeutung von $R_7$ ist Wasserstoff.

Besonders bevorzugte erfindungsgemässe Farbstoffe sind solche der Formel (1), worin $R_1$ $C_1$-$C_4$ Alkyl, $R_2$ Wasserstoff, $C_1$-$C_4$-Alkyl, $C_1$-$C_4$-Alkoxy oder $C_1$-$C_4$-Alkylcarbonylamino, $R_3$ Wasserstoff, $C_1$-$C_4$-Alkyl oder $C_1$-$C_4$-Alkoxy, $R_4$ Wasserstoff, $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist, oder $R_3$ und $R_4$ zusammen mit dem Stickstoffatom und den beiden sie verbindenden Kohlenstoffatomen einen Dihydrooxazin- oder Tetrahydropyridinring, welcher 1 bis 3 Methylgruppen trägt, $R_5$ Wasserstoff, $C_1$-$C_4$-Alkyl oder $C_1$-$C_4$-Alkyl, welches durch Hydroxy, $C_1$-$C_4$-Alkoxy, Chlor, Cyan, Phenyl oder Cyan-ethoxy substituiert ist, $R_6$ Wasserstoff oder $R_5$ und $R_6$ zusammen mit dem Stickstoffatom und den beiden sie verbindenden Kohlenstoffatomen einen Tetrahydropyridinring und $R_7$ Wasserstoff bedeutet.

Unter diesen sind jene besonders bevorzugt, bei denen $R_1$ Methyl und $R_2$ Wasserstoff, Methyl, Methoxy, Acetylamino oder Propionylamino bedeutet.

Die erfindungsgemässen Farbstoffe werden z.B. herbestellt, indem man eine Verbindung der Formel

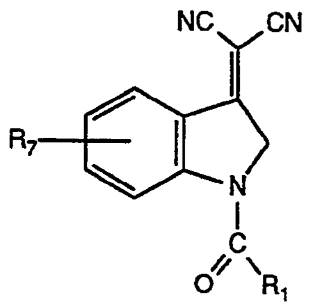

(2)

mit einer Verbindung der Formel

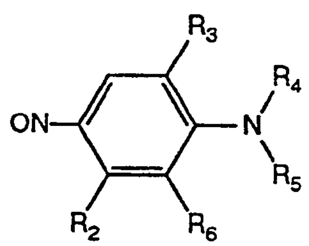

(3)

umsetzt, wobei $R_1$, $R_2$, $R_3$, $R_4$, $R_5$, $R_6$ und $R_7$ die unter der Formel (1) angegebenen Bedeutungen aufweisen. Die Umsetzung der Verbindung (2) mit der Verbindung (3) geschieht unter analogen Bedingungen wie sie für ähnliche Kondensationsreaktionen bekannt sind, beispielsweise durch Rühren bei Raumtemperatur in Gegenwart eines wasserentziehenden Lösungsmittels oder indem man das Reaktionswasser azeotrop abdestilliert.

Die Verbindungen der Formel

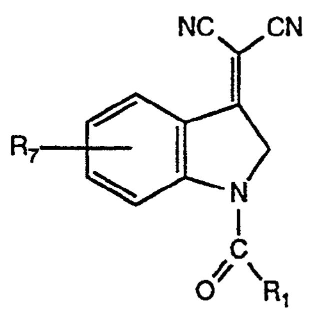

(2)

worin $R_1$ Alkyl oder Aryl und $R_7$ Wasserstoff, Alkyl, Alkoxy, Halogen oder Nitro bedeutet, sind neu und stellen einen weiteren Gegenstand der vorliegenden Erfindung dar.

Man erhält die Verbindungen der Formel (2) z.B., indem man eine Verbindung der Formel

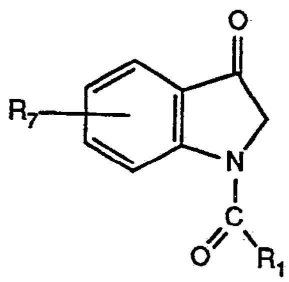

(4)

mit Malonsäuredinitril kondensiert.

Diese Kondensation erfolgt analog zu bekannten Reaktionen ähnlicher Art (Knoevenagel-Kondensation), vorzugsweise in einem inerten organischen Lösungsmittel, z.B. Ethanol, Butanol, Benzol, Toluol oder Chlorbenzol, bei Temperaturen zwischen 20 und 150°C, wobei die Anwesenheit eines Katalysators, z.B. Piperidin oder ein Gemisch aus Piperidin und Eisessig, vorteilhaft ist.

Die Verbindungen der Formel (4) sind bekannt oder können auf an sich bekannte Art und Weise erhalten werden.

Die Nitrosoverbindungen der Formel (3) sind zum Teil ebenfalls bekannt oder können auf bekannte Art und Weise hergestellt werden. Dies trifft für jene Verbindungen der Formel (3) zu, bei denen $R_6$ Wasserstoff und $R_3$ Wasserstoff, Alkoxy, Aryloxy, Alkylthio oder Arylthio bedeutet.

Neu sind die Verbindungen der Formel

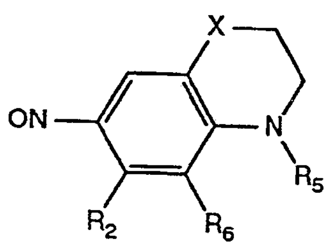

(5)

worin $R_2$ Wasserstoff, Alkyl, Alkoxy, -NH-CO-Alkyl oder -NH-CO-Aryl, $R_5$ Wasserstoff, Alkyl oder Aralkyl, $R_6$ Wasserstoff oder $R_5$ und $R_5$, zusammen mit dem Stickstoffatom und den beiden sie verbindenden Kohlenstoffatomen, einen 5- oder 6-gliedrigen Rinb und

X die direkte Bindung, -O- oder

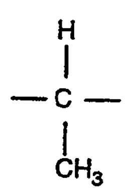

bedeuten, wobei der stickstoffhaltige Ring in der Formel (5) noch einen ankondensierten Benzolring oder 1 oder 2 Methylgruppen tragen kann.

Die Verbindungen der Formel (5) werden auf an sich bekannte Art hergestellt, beispielsweise indem man eine Verbindung der Formel

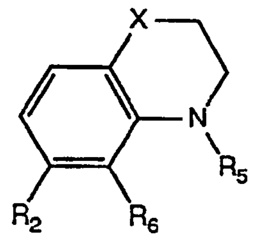

(6)

worin $R_2$, $R_5$, $R_6$ und X die unter der Formel (5) angegebenen Bedeutungen aufweisen, nitrosiert. Die Nitrosierung erfolgt auf an sich bekannte Weise, z.B. durch Umsetzen einer Verbindung der Formel (6) in wässrigem salzsaurem Medium mit Natriumnitrit bei niedriger Temperatur, z.B. zwischen 0 und 5°C. Die Verbindungen der Formel (6) sind bekannt oder können auf an sich bekannte Art und Weise hergestellt werden.

Die erfindungsgemässen Verbindungen der Formel (1) finden Verwendung als lichtabsorbierende Substanzen in optischen Aufzeichnungsmedien.

Der Aufbau der Aufzeichnungsmedien ist an sich bekannt.

Als Träger kommen z.B. Glasplatten oder -scheiben sowie Kunststoffplatten/-scheiben, wie solche aus Polystyrol, Polycarbonat und insbesondere aus Polymethylmethacrylat in Frage.

Die erfindungsgemässen Aufzeichnungsmedien enthalten ausserdem bevorzugt eine lichtreflektierende Schicht, so dass das eingestrahlte und durch die farbige Schicht wandernde Licht (soweit es nicht absorbiert wird) an der Reflektorschicht reflektiert wird und nochmals durch die gefärbte Schicht wandert. Dabei ist es vorteilhaft, in diesen Fällen der Farbstoffschicht die Dicke $\lambda/4$ ($\lambda$ = Wellenlänge des eingestrahlten Lichts) zu geben, da dann durch Interferenz eine besonders hohe Nutzung (Schwächung) des eingestrahlten Lichts erreicht wird. Bei Verwendung der erfindungsgemässen Farbstoffe werden jedoch auch mit Schichtdicken, die deutlich unter $\lambda/4$ liegen, sehr empfindliche Aufzeichnungsträger erhalten, was überraschend ist.

Geeignete lichtreflektierende Materialien sind z.B. Metalle wie Aluminium, Rhodium, Gold, Zinn, Blei, Wismut oder Kupfer; in Frage kommen auch dielektrische Spiegel.

Die lichtabsorbierende Schicht kann in einer Ausführungsform der erfindungsgemässen Aufzeichnungsmedien nur aus einer Verbindung der Formel (1) bestehen.

In einer weiteren Ausführungsform enthält die lichtabsorbierende Schicht neben einer dieser Verbindungen ein thermoplastisches Bindemittel, z.B. Polystyrol, Polyvinylacetat, Polyvinylpyrrolidon, Celluloseacetatbutyrat, Polysulfonamid, Polycarbonat oder Cellulosenitrat.

Die Dicke der lichtabsorbierenden Schicht kann in weiten Grenzen variieren; vorteilhaft ist eine Dicke von 5 bis 350 nm. Bevorzugt weist die lichtabsorbierende Schicht eine Dicke von 10 bis 200 nm auf. Besteht die lichtabsorbierende Schicht nur aus Farbstoff allein, so ist sie bevorzugt 10 bis 100 nm dick.

Das erfindungsgemässe Aufzeichnungsmedium lässt sich mit der fokussierten Strahlung einer Lichtquelle beschreiben und lesen. Als Lichtquellen kommen z.B. Laser und hierbei insbesondere solche in Frage, die im Wellenlängenbereich von 600 bis 850 nm emittieren. Beispiele sind der Ga-Al-As-Diodenlaser und insbesondere der He-Ne-Laser.

Die erfindungsgemäss für die lichtabsorbierende Schicht verwendeten Verbindungen der Formel (1) weisen breite Absorptionsbanden im NIR-Bereich (naher Infrarot-Bereich) mit einem Maximum im Wellenlängenbereich von etwa 600 bis 800 nm auf.

Aufgrund der beschilderten Absorptionseigenschaften weisen optische Aufzeichnungsmedien, die mit diesen Verbindungen ausgerüstet sind, eine ügeraus grosse Empfindlichkeit gegenüber der Strahlung von Lichtquellen, insbesondere Lasern, auf, die im Wellenlängenbereich von 600 bis 800 nm emittieren. So ist es bei der Verwendung z.B. eines Ga-Al-As-Diodenlaser und insbesondere eines He-Ne-Lasers möglich, die erfindungsgemässen Aufzeichnungsmedien mit Lichtpulsen von geringer Energie zu beschreiben und zu lesen.

Die Dicke der beim Aufdampfen aufwachsenden Schicht kann mit Hilfe bekannter Verfahren überwacht werden, z.B. mit Hilfe eines optischen Systems, welches das Reflexionsvermögen der mit dem Absorptionsmaterial bedeckten Reflexionsobefläche misst. Vorzugsweise wird das Wachsen der Schichtdicke mit einem Schwingquarz verfolgt.

Für das Aufbringen der Schichten aus Lösung bereitet man in einem geeigneten Lösungsmittel, wie Methylenchlorid, Chloroform, Aceton, Methylethylketon, Cyclohexanon, Toluol, Acetonitril, Essigester oder Methanol, eine Lösung oder gegebenenfalls eine Dispersion der erfindungsgemässen Verbindung und setzt gegebenenfalls eines der zuvor genannten thermoplastischen Bindemittel bzw. Gemische aus mehreren Bindemitteln zu.

Diese Farbstoffzubereitung kann durch Schleudern, Rakeln oder Tauchen auf ein zuvor gereinigtes Substrat aufgebracht und die Schicht an der Luft getrocknet werden. Der Film kann auch im Vakuum un/oder bei

erhöhter Temperatur getrocknet werden.

Je nach Systemaufbau wird zuerst der Farbstoff und dann der Reflektor aufgebracht oder, vorzugsweise, umgekehrt verfahren. Auf das Aufbringen einer reflektierenden Schicht kann gegebenenfalls verzichtet werden.

Die nachfolgenden Beispiele dienen der Erläuterung der Erfindung, ohne sie darauf zu beschränken.

Beispiel 1:

A) 52 Teile 1-Acetyl-3-oxo-2,3-dihydroindol werden in 500 Teilen n-Butanol verrührt und mit 18 Teilen Eisessig, 5 Teilen Piperidin und 80 Teilen Malonsäuredinitril versetzt. Das Gemisch wird auf 90°C geheizt und 2 Stunden bei dieser Temperatur gerührt. Dann wird das Reaktionsgemisch abgekühlt, abgenutscht, mit Methanol gewaschen und getrocknet. Man erhält 30 Teile der Verbindung der Formel:

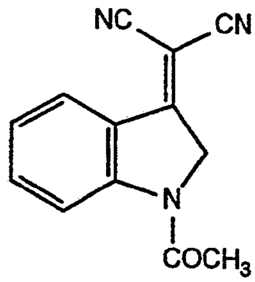

mit einem Schmelzpunkt von 159- 160°C.

B) 10 Teile des oben beschriebenen Produktes werden mit 12 Teilen 4-Nitroso-3-acetyl-amino-N,N-diethylanilin in 300 Teilen Essigsäureanhydrid gelöst und 2 Stunden bei Raumtemperatur gerührt. Das ausgefallene Reaktionsprodukt wird abgenutscht, mit Ethanol gewaschen und getrocknet. Man erhält 12 Teile des Farbstoffes der Formel:

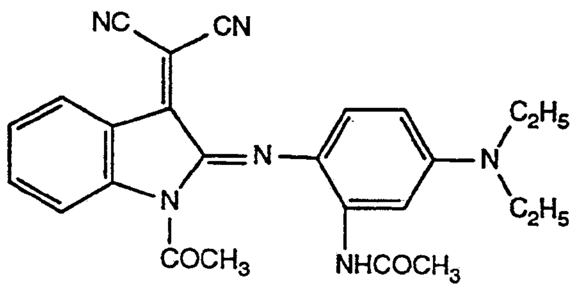

$\lambda_{max}$ (DMF): 708 nm

Beispiel 2:

A) 100 Teile der Verbindung der Formel

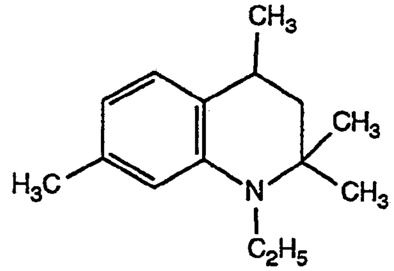

werden in 170 Teilen konzentrierter Salzsäure gelöst und mit 500 Teilen Eis versetzt. Zu der erhaltenen Lösung lässt man bei 0 bis 5°C eine Lösung von 30 Teilen Natriumnitrit in 60 Teilen Wasser zutropfen. Nach 1 Stunde wird die erhaltene Suspension abfiltriert. Der Rückstand wird in 200 Teilen Wasser angeschlämmt und mit konzentrierter Natronlauge auf einen pH-Wert von 12 gestellt. Durch Extraktion mit Toluol

und Eindampfen der Toluollösung erhält man 40 Teile Nitrosoverbingung der Formel

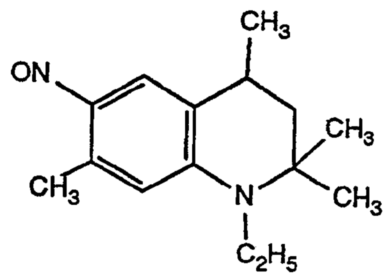

B) 10 Teile des gemäss Beispiel 1 A erhaltenen Dicyanmethylenindols und 13 Teile der gemäss Beispiel 2 A erhaltenen Nitrosoverbindung werden in 300 Teilen Essigsäureanhydrid gelöst und 2 Stunden bei Raumtemperatur gerührt. Das ausgefallene Reaktionsprodukt wird abgenutscht, mit Ethanol gewaschen und getrocknet. Man erhält 10 Teile des Farbstoffes der Formel

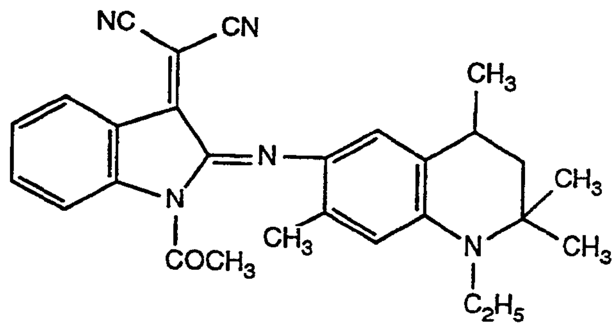

$\lambda_{max}$ (DMF): 724 nm

Beispiel 3:

Ersetzt man im Beispiel 2 die 13 Teile des erwähnten Nitrosoderivates durch 13,5 Teile des Nitrosoderivates der Formel

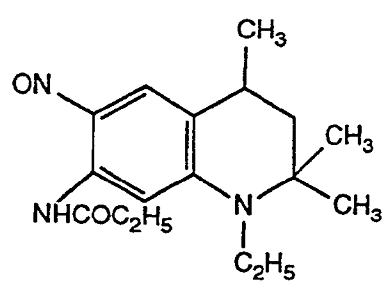

so erhält man den Farbstoff der Formel

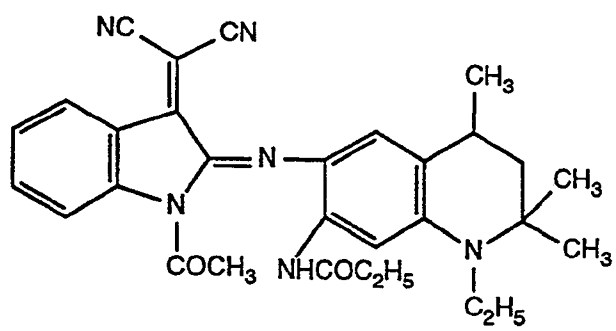

$\lambda_{max}$ (DMF): 739 nm

Beispiel 4:

Eine Lösung des gemäss Beispiel 3 erhaltenen Farbstoffes in Trichlorethylen wird auf eine runde Glasscheibe aufgeschleudert. Man erhält eine ca. 60 nm dicke lichtabsorbierende Schicht auf der Oberfläche.

Der erhaltene Aufzeichnungsträger wird mit den Lichtpulsen eines Dioden-Lasers (λ = 780 nm) bestrahlt, der auf die Oberfläche der Beschichtung fokussiert ist. Durch die eingestellte Energie wird pro Puls eine kreisrunde Vertiefung mit steilen Wänden und ohne Wulst an der Oberfläche erzeugt.

Beispiele 5-36:

Eine Glasscheibe wird auf der Reflektorschicht mit einer ca. 60 nm dicken Schicht eines Farbstoffes der Formel

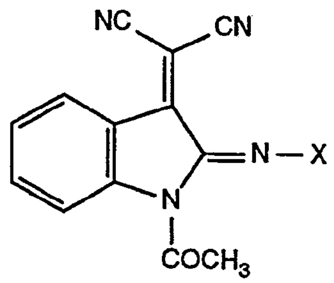

bedampft, wobei X die in der Tabelle angegebenen Bedeutungen hat. Die erhaltenen Aufzeichnungsträber weisen jeweils ähnlich gute Eigenschaften auf wie die gemäss Beispiel 4 erhaltenen.

| Beispiel | X |
|---|---|
| 5 | 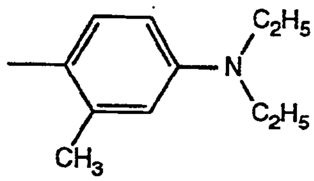 |
| 6 | 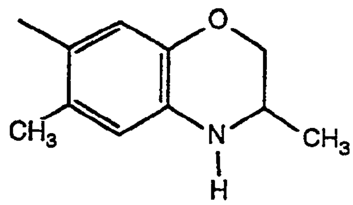 |
| 7 | 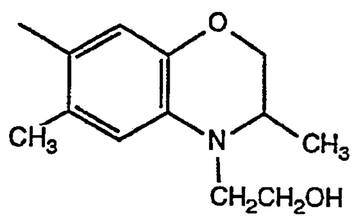 |
| 8 | 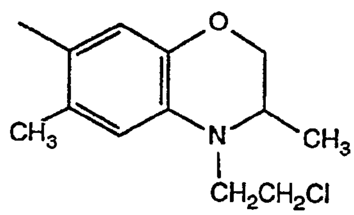 |
| 9 | 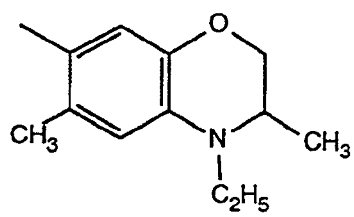 |
| 10 | 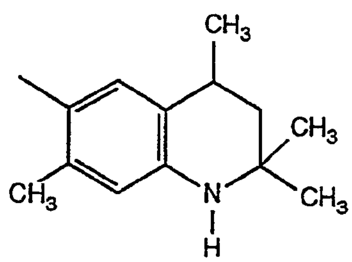 |

| Beispiel | X |
|---|---|
| 11 | 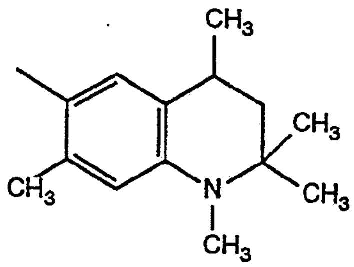 |
| 12 | 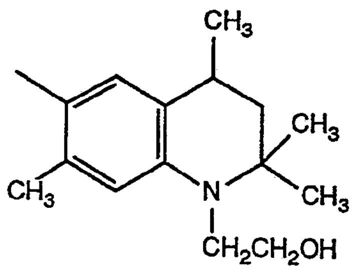 |
| 13 | 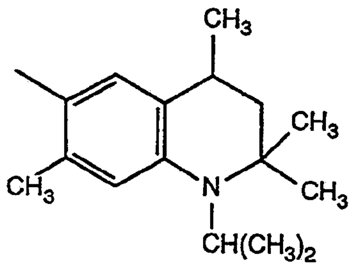 |
| 14 | 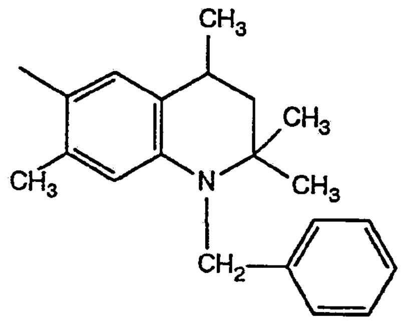 |
| 15 | 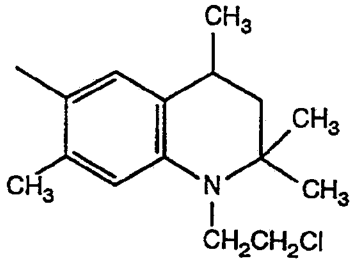 |

| Beispiel | X |
|---|---|
| 16 | 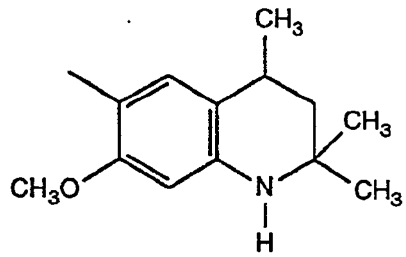 |
| 17 | 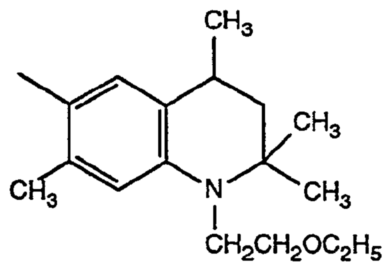 |
| 18 | 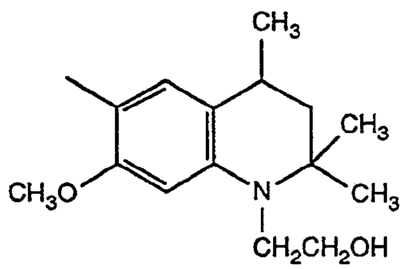 |
| 19 | 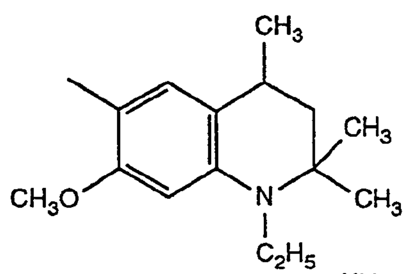 |
| 20 | 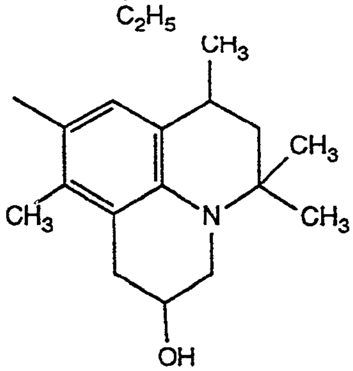 |

| Beispiel | X |
|---|---|
| 21 | 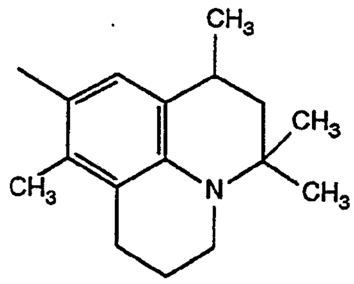 |
| 22 | 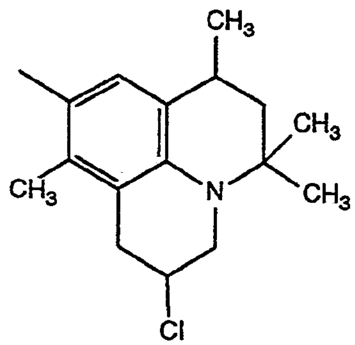 |
| 23 | 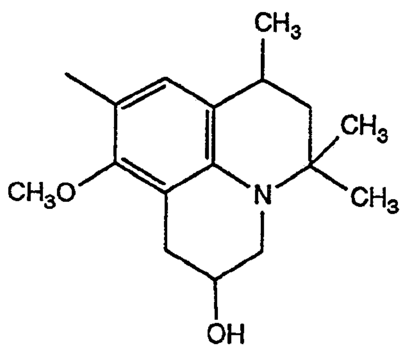 |
| 24 | 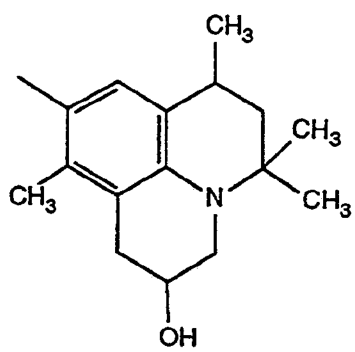 |

| Beispiel | X |
|---|---|
| 25 | 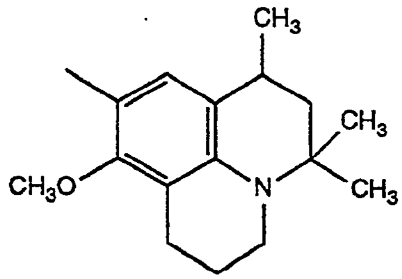 |
| 26 | 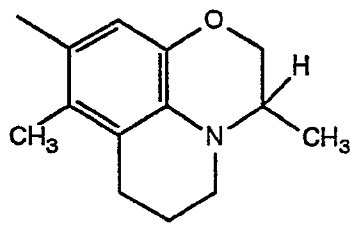 |
| 27 | 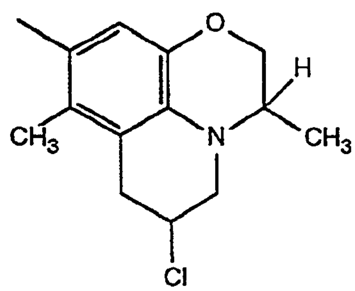 |
| 28 | 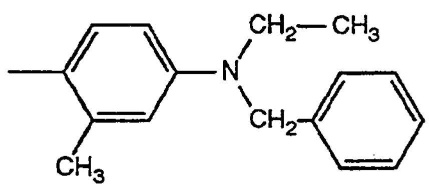 |
| 29 | 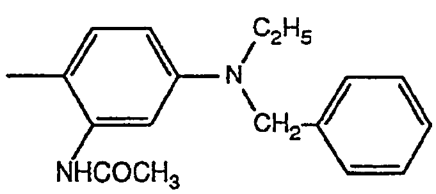 |

| Beispiel | X |
|---|---|
| 30 | 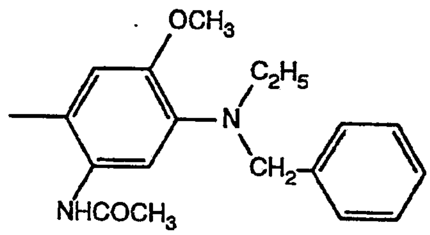 |
| 31 | 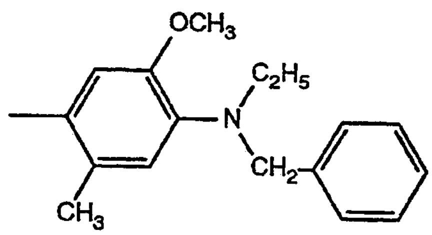 |
| 32 | 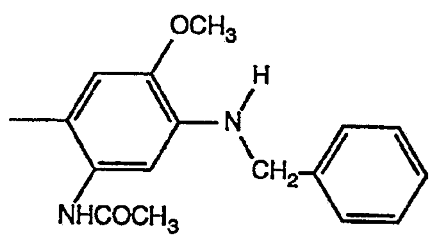 |
| 33 | 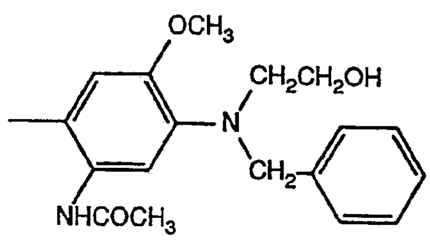 |
| 34 | 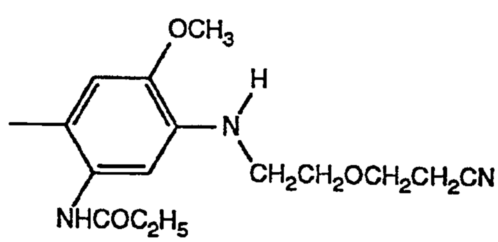 |

| Beispiel | X |
|---|---|
| 35 | 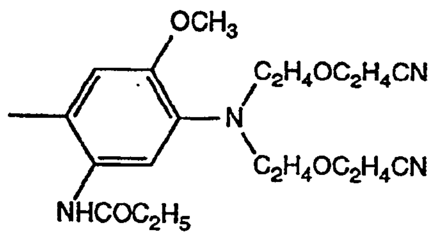 |
| 36 | 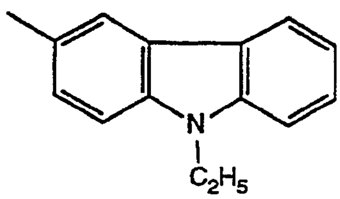 |

Beispiele 37-39:

Arbeitet man wie in Beispiel 1A) beschrieben, verwendet jedoch anstelle von 1-Acetyl-3-oxo-2,3-dihydroindol äquivalente Mengen 1-Propionyl-, 1-Valeryl- oder 1-Benzoyl-3-oxo-2,3-dihydroindol und setzt die erhaltenen Produkte mit der im Beispiel 3 aufgeführten Nitrosoverbindung um, so erhält man die Farbstoffe der Formel

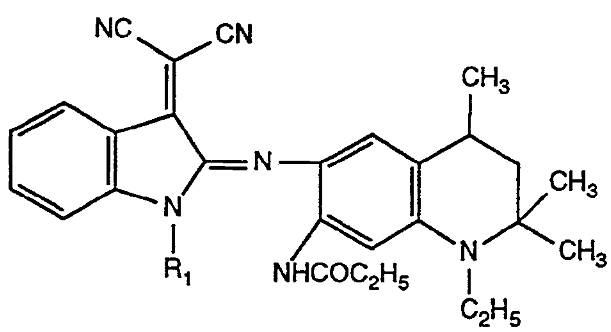

| Beispiel | $R_1$ |
|---|---|
| 37 | $-CO-CH_2-CH_3$ |
| 38 | $-CO-CH_2-CH_2-CH_2-CH_3$ |
| 39 | 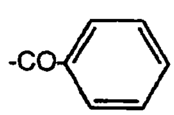 |

**Patentansprüche**

1. Farbstoffe der Formel

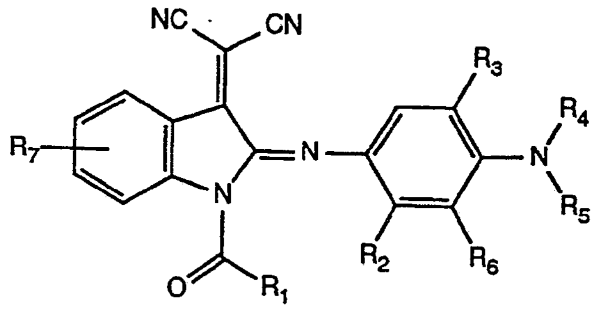

(1)

worin $R_1$ Alkyl oder Aryl, $R_2$ Wasserstoff, Alkyl, Alkoxy, -NH-CO-Alkyl oder -NH-CO-Aryl, $R_3$ Wasserstoff, Alkoxy, Aryloxy, Alkylthio, Arylthio oder $R_3$ und $R_4$, zusammen mit dem Stickstoffatom und den beiden sie verbindenden C-Atomen, einen 5-oder 6-gliedrigen Ring, welcher einen ankondensierten Benzolring aufweisen kann, $R_4$ Wasserstoff, Alkyl, Aralkyl oder $R_4$ und $R_5$ zusammen mit dem Stickstoffatom, an das sie gebunden sind, einen 5- oder 6-gliedrigen Ring, $R_5$ Wasserstoff, Alkyl oder Aralkyl, $R_6$ Wasserstoff oder $R_5$ und $R_6$, zusammen mit dem Stickstoffatom und den beiden sie verbindenden C-Atomen, einen 5- oder 6-gliedrigen Ring und $R_7$ Wasserstoff, Alkyl, Hydroxy, Alkoxy, Halogen oder Nitro bedeuten.

2. Farbstoffe gemäss Anspruch 1, worin $R_1$ einen unsubstituierten $C_1$-$C_4$-Alkylrest, insbesondere Methyl bedeutet.

3. Farbstoffe gemäss einem der Ansprüche 1 oder 2, worin $R_2$ Wasserstoff, $C_1$-$C_4$-Alkyl, $C_1$-$C_4$-Alkoxy, $C_1$-$C_4$-Alkylcarbonylamino oder Phenylcarbonylamino bedeutet.

4. Farbstoffe gemäss Anspruch 3, worin $R_2$ Wasserstoff, Methyl, Methoxy, Acetylamino oder Propionylamino bedeutet.

5. Farbstoffe gemäss einem der Ansprüche 1 bis 4, worin $R_3$ Wasserstoff, $C_1$-$C_4$-Alkyl oder $C_1$-$C_4$-Alkoxy, bedeuten oder worin $R_3$ und $R_4$ zusammen mit dem Stickstoffatom 4 und den sie verbindenden Kohlenstoffatomen einen Dihydrooxazin- oder Tetrahydropyridinring, welcher 1 bis 3 Methylgruppen trägt, bilden.

6. Farbstoffe gemäss einem der Ansprüche 1 bis 5, worin $R_4$ Wasserstoff, unsubstituiertes $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist, bedeutet.

7. Farbstoffe gemäss einem der Ansprüche 1 bis 6, worin $R_5$ Wasserstoff, unsubstituiertes $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist, bedeutet oder worin $R_5$ und $R_6$, zusammen mit dem Stickstoffatom und den sie verbindenden Kohlenstoffatomen einen Tetrahydropyridinring, welcher unsubstituiert oder durch Hydroxy oder Chlor substituiert ist, bildet.

8. Farbstoffe gemäss einem der Ansprüche 1 bis 7, worin $R_6$ Wasserstoff bedeutet.

9. Farbstoffe gemäss einem der Ansprüche 1 bis 8, worin $R_7$ Wasserstoff bedeutet.

10. Farbstoffe gemäss Anspruch 1, worin $R_1$ $C_1$-$C_4$ Alkyl, $R_2$ Wasserstoff, $C_1$-$C_4$-Alkyl, $C_1$-$C_4$-Alkoxy oder $C_1$-$C_4$-Alkylcarbonylamino, $R_3$ Wasserstoff, $C_1$-$C_4$-Alkyl oder $C_1$-$C_4$-Alkoxy, $R_4$ Wasserstoff, $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist, oder $R_3$ und $R_4$ zusammen mit dem Stickstoffatom und den beiden sie verbindenden Kohlenstoffatomen einen Dihydrooxazin- oder Tetrahydropyridinring, welcher 1 bis 3 Methylgruppen trägt, $R_5$ Wasserstoff, $C_1$-$C_4$-Alkyl oder $C_1$-$C_4$-Alkyl, welches durch Hydroxy, $C_1$-$C_4$-Alkoxy, Chlor, Cyan, Phenyl oder Cyanethoxy substituiert ist, $R_6$ Wasserstoff oder $R_5$ und $R_5$ zusammen mit dem Stickstoffatom und den beiden sie verbindenden Kohlenstoffatomen einen Tetrahydropyridinring und $R_7$ Wasserstoff bedeuten.

**11.** Farbstoffe gemäss Anspruch 10, worin $R_1$ Methyl und $R_2$ Wasserstoff, Methyl, Methoxy, Acetylamino oder Propionylamino bedeutet.

**12.** Verfahren zur Herstellung von Farbstoffen der Formel (1) gemäss Anspruch 1, dadurch gekennzeichnet, dass man eine Verbindung der Formel

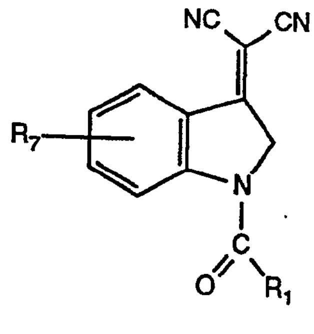

(2)

mit einer Verbindung der Formel

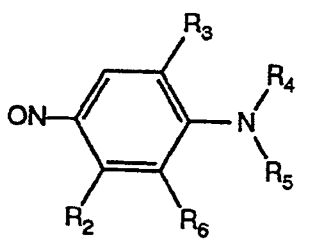

(3)

umsetzt, wobei $R_1$, $R_2$, $R_3$, $R_4$, $R_5$, $R_6$ und $R_7$ die unter der Formel (1) angegebenen Bedeutungen aufweisen.

**13.** Verbindungen der Formel

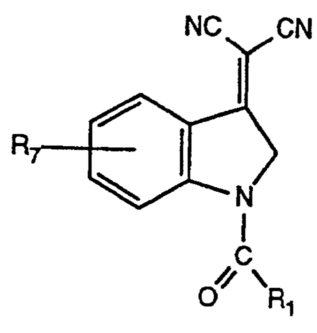

(2)

worin $R_1$ Alkyl oder Aryl und $R_7$ Wasserstoff, Alkyl, Alkoxy, Halogen oder Nitro bedeutet.

**14.** Verfahren zur Herstellung von Verbindungen der Formel (2) gemäss Anspruch 13, dadurch gekennzeichnet, dass man eine Verbindung der Formel

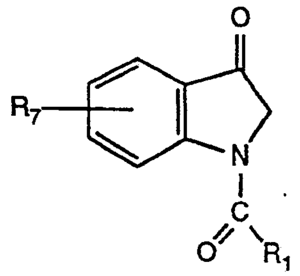

(4)

mit Malonsäuredinitril kondensiert.

**15.** Verbindungen der Formel

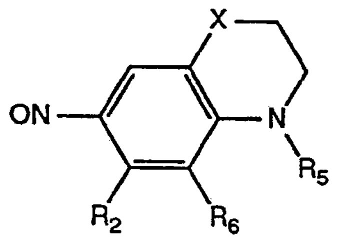

(5)

worin $R_2$ Wasserstoff, Alkyl, Alkoxy, -NH-CO-Alkyl oder -NH-CO-Aryl, $R_5$ Wasserstoff, Alkyl oder Aralkyl, $R_6$ Wasserstoff oder $R_5$ und $R_6$, zusammen mit dem Stickstoffatom und den beiden sie verbindenden Kohlenstoffatomen, einen 5- oder 6-gliedrigen Ring und X die direkte Bindung, -O- oder

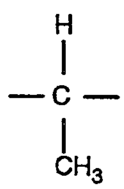

bedeuten, wobei der stickstoffhaltige Ring in der Formel (5) noch einen ankondensierten Benzolring oder 1 oder 2 Methylgruppen tragen kann.

**16.** Verfahren zur Herstellung von Verbindungen der Formel (5) gemäss Anspruch 15, dadurch gekennzeichnet, dass man eine Verbindung der Formel

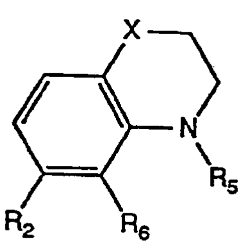

(6)

worin $R_2$, $R_5$, $R_6$ und X die unter der Formel (5) angegebenen Bedeutungen aufweisen, nitrosiert.

**17.** Verwendung von Farbstoffen der Formel (1) gemäss Anspruch 1 als NIR-absorbierende Substanz in optischen Aufzeichnungsmedien.

**18.** Optische Aufzeichnungsmedien, enthaltend eine Verbindung der Formel (1) gemäss Anspruch 1.